(19) Europäisches Patentamt
European Patent Office
Office européen des brevets

(11) Veröffentlichungsnummer: **0 284 650**
**A1**

(12) # EUROPÄISCHE PATENTANMELDUNG

(21) Anmeldenummer: **87112196.8**

(51) Int. Cl.4: **C08K 5/40**, C08L 21/00

(22) Anmeldetag: **22.08.87**

(30) Priorität: **21.03.87 DE 3709313**

(43) Veröffentlichungstag der Anmeldung:
**05.10.88 Patentblatt 88/40**

(84) Benannte Vertragsstaaten:
**AT BE DE ES FR GB IT NL SE**

(71) Anmelder: **Firma Carl Freudenberg**
**Höhnerweg 4**
**D-6940 Weinheim/Bergstrasse(DE)**

(72) Erfinder: **Kuhlmann, Thomas, Dr.**
**Werderplatz 9**
**D-6900 Heidelberg(DE)**
Erfinder: **Von Arndt, Ernst-Moritz, Dr.**
**Leuschnerstrasse 31**
**D-6940 Weinheim(DE)**

(74) Vertreter: **Weissenfeld-Richters, Helga, Dr.**
**Höhnerweg 2**
**D-6940 Weinheim/Bergstrasse(DE)**

(54) **Vulkanisationsbeschleuniger.**

(57) Bei Verwendung von Tetrabenzylthiuramdisulfid als Vulkanisationsbeschleuniger entstehen keine Ausblüheffekte.

EP 0 284 650 A1

Xerox Copy Centre

## Vulkanisationsbeschleuniger

Die Verwendung von Thiurambeschleunigern in der Gummiindustrie führt leicht zu Ausblüheffekten an der Oberfläche der Gummiartikel. Diese weißlichen, kristallinen Flecken resultieren aus den schwer löslichen Umwandlungsprodukten der Thiurame (M. Abele et al., Handbuch für die Gummiindustrie <1970> Seite 316, Bayer AG, Leverkusen <Hrsg.>; W. Hofmann, Vulkanisation & Vulkanisationshilfsmittel, <1965>, Seite 169 und 227 f., Verlag Berliner Union GmbH). Die Ausblühungen an den Gummiartikeln sind nicht nur ein optisches Problem. Bei der Handhabung der Vulkanisate führt der Kontakt mit den ausgeblühten Formteilen zu Allergien (W. Hofmann, Bayer-Mitt. f. d. Gummi-Ind. Nr. 46, <1972>). Durch Ausheizen oder Abwaschen lassen sich die Ausblühungen zwar entfernen; sie treten jedoch nach kurzer Zeit wieder hervor. Ferner können durch die Ausblühungen Einbußen bei der Qualität von Verklebungen auftreten (Verschmutzte Kontaktflächen).

Bisher kann dieses Problem nur durch Ersatz, z. B. durch Sulfenamide, oder Verringerung der Thiuramkonzentration in den Elastomeren gelöst werden. Gegen die Allergien sind Schutzmaßnahmen wie Handschuhe eine Hilfe, um den direkten Hautkontakt zu vermeiden. Die bekannten Lösungen besitzen zwei Nachteile: Die Änderung der Thiuramkonzentration wirkt sich meist negativ auf die mechanischen und Vulkanisationseigenschaften der Mischung aus. Ein vollkommener Schutz gegen die beobachteten Allergien durch Schutzkleidung ist nicht möglich.

Die Erfindung hat zur Aufgabe, die Bildung der vorbeschriebenen Ausblühungen an Kautschuk-Vulkanisaten zu vermeiden und dennoch einen Beschleuniger anzugeben, durch dessen Einsatz weder hinsichtlich Verarbeitbarkeit noch Produktqualität, auch bezüglich der Verklebungseigenschaften mit anderen Materialien, Einbußen bzw. Nachteile hingenommen zu werden brauchen.

Gelöst wird diese Aufgabe durch die im Patentanspruch dargelegte Maßnahme.

Eine mögliche Herstellungsmethode für den erfindungsgemäß eingesetzten Tetrabenzylthiuramdisulfid-Beschleuniger ist in DE-PS 31 05 587 in einem Beispiel genannt. Seine Eignung zur Lösung des oben genannten Problems wurde dabei jedoch nicht erkannt.

Die erfindungsgemäße Verwendung des Vulkanisations-Beschleunigers Tetrabenzylthiuramdisulfid, chemische Formel

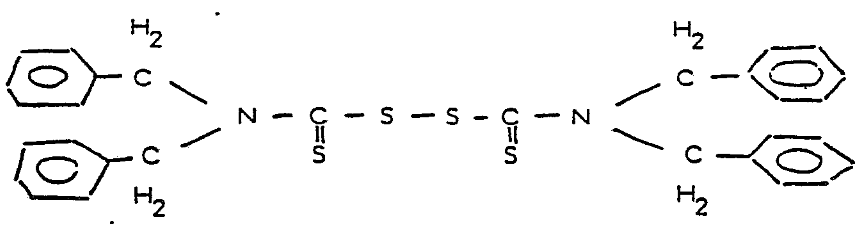

bietet neben der Lösung der gestellten Aufgabe folgende Vorteile:

Die Produkteigenschaften des Elastomeren und die Qualität des Vulkanisationsprozesses sind nicht verschlechtert. Da die Spaltprodukte des Tetrabenzylthiuramdisulfids durch Wasser nicht auswaschbar sind, bereitet die Deponierung von gebrauchten Gummiteilen keine zusätzlichen Probleme.

Einen Vergleich des Einsatzes der drei Beschleuniger Tetetramethylthiuramdisulfid, Diphenyldimethylthiuramdisulfid und Tetrabenzylthiuramdisulfid (Erfindung) in einer einfachen Mischung zeigt die folgende Tabelle:

| | Mischung | | |
|---|---|---|---|
| | 1 | 2 | 3 |
| Perbunan N 2807 | 100,0 Teile | wie 1 | wie 1 |
| ZnO-Paste | 5,5 " | wie 1 | wie 1 |
| Stearinsäure | 1,0 " | wie 1 | wie 1 |
| Thermax N 990 | 50,0 " | wie 1 | wie 1 |
| S-Paste | 0,5 | wie 1 | wie 1 |
| Tetramethylthiuramdisulfid | --- | 3,0 | --- |
| Diphenyldimethylthiuramdisulfid | 3,0 | --- | --- |
| Tetrabenzylthiuramdisulfid (Erfindung) | --- | --- | 3,0 |
| Ausblühungen nach 6 Wochen Lagerzeit, bezogen auf die Vulkanisations-Oberfläche | 70% | 90% | keine |

Allergien bei der Handhabung der Vulkanisate aus Mischung 3 treten nicht auf. Die Produkte können problemlos und dauerhaft mit anderen Materialien verklebt werden. Optisch ist an den Gummiartikeln keine Strukturierung erkennbar.

## Ansprüche

Verwendung von Tetrabenzylthiuramdisulfid als Vulkanisations-Beschleuniger zum Verhindern der Entstehung von Ausblühungen auf Elastomerprodukten.

Europäisches Patentamt

# EUROPÄISCHER RECHERCHENBERICHT

Nummer der Anmeldung

EP 87 11 2196

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CHEMICAL ABSTRACTS, Band 91, Nr. 8, 20. August 1979, Seite 67, Zusammenfassung Nr. 58435r, Columbus, Ohio, US; N. YU. GRUSHEVSKAYA: "Determination of the vulcanization accelerator tetrabenzylthiuram disulfide and some of its reaction products in sanitary-chemical studies of rubbers", & KAUCH. REZINA 1979, (5), 47-9 * Zusammenfassung * ----- | 1 | C 08 K 5/40<br>C 08 L 21/00 |
| | | | **RECHERCHIERTE SACHGEBIETE (Int. Cl.4)** |
| | | | C 08 K<br>C 08 L |

Der vorliegende Recherchenbericht wurde für alle Patentansprüche erstellt

| Recherchenort | Abschlußdatum der Recherche | Prüfer |
|---|---|---|
| DEN HAAG | 06-07-1988 | VAN HUMBEECK F.W.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)